# EUROPÄISCHE PATENTANMELDUNG

(11) **EP 1 199 198 A2**
(43) Veröffentlichungstag der Anmeldung: **24.04.2002**
(21) Anmeldenummer: 01118718.4
(22) Anmeldetag: 03.08.2001
(51) Int. Cl.: B60H 1/34

(54) **Luft-Ausströmer, insbesondere zur Fahrzeugklimatisierung**

(30) Priorität: 18.10.2000 DE 20017852 U
(71) Anmelder: TRW Automotive Electronics & Components GmbH & Co. KG, 67677 Enkenbach/Alsenborn (DE)
(72) Erfinder: Demerath, Michale, 66909 Hüffler (DE)
(74) Vertreter: Sties, Jochen, Dipl.-Ing.

(57) **Zusammenfassung**

Ein Luft-Ausströmer, insbesondere zur Fahrzeugklimatisierung, mit einem Gehäuse (12), mehreren Lamellen (14), die schwenkbar angebracht sind, und einem Einstellelement (24), mittels dem die Ausrichtung der Lamellen eingestellt werden kann, ist dadurch gekennzeichnet, daß ein erstes Koppelelement (16) vorgesehen ist, mit dem jede Lamelle (14) um eine erste Schwenkachse (21) drehbar gekoppelt ist, daß das erste Koppelelement (16) in einer Schiebeführung (20) verschiebbar am Gehäuse (12) gelagert ist und daß an jeder Lamelle eine zweite Schwenkachse (22) vorgesehen ist.

## Beschreibung

Die Erfindung betrifft einen Luft-Ausströmer, insbesondere zur Fahrzeugklimatisierung, mit einem Gehäuse, mehreren Lamellen, die schwenkbar angebracht sind, und einem Einstellelement, mittels dem die Ausrichtung der Lamellen eingestellt werden kann.

Mit den Lamellen, die entweder horizontal oder vertikal angeordnet sein können, kann die Richtung des aus dem Ausströmer austretenden Luftstroms eingestellt werden. Üblicherweise sind die Lamellen um fest im Gehäuse angebrachte Achsen drehbar. Um die Drehung der Lamellen nicht zu behindern, muß ausreichend Platz zwischen den äußeren Lamellen und dem Gehäuse sein. Dadurch kann im Randbereich bei bestimmten Winkelstellungen der Lamellen der Luftstrom nur unzureichend gelenkt werden. Außerdem kann bei bestimmten Winkelstellungen der Eindruck einer ungleichmäßigen Einteilung der Ausströmeroberfläche durch die Lamellen entstehen.

Die Aufgabe der Erfindung ist daher, den Abstand zwischen den außenliegenden Lamellen und dem Gehäuse, insbesondere in den beiden Extremstellungen der Lamellen, soweit wie möglich zu verringern, so daß im Randbereich des Ausströmers kein ungerichteter Luftstrom entsteht. Außerdem soll in jeder Winkelstellung eine gleichmäßige Verteilung der Lamellen über die Oberfläche des Ausströmers ermöglicht werden.

Zu diesem Zweck ist erfindungsgemäß vorgesehen, daß ein erstes Koppelelement vorgesehen ist, mit dem jede Lamelle um eine erste Schwenkachse drehbar gekoppelt ist, daß das erste Koppelelement in einer Schiebeführung verschiebbar am Gehäuse gelagert ist und daß an jeder Lamelle eine zweite Schwenkachse vorgesehen ist. Aufgrund der Tatsache, daß die Lamellen nicht um eine einzige, gehäusefeste Schwenkachse verschwenkt werden, sondern um zwei Schwenkachsen bewegt werden, ist es möglich, durch Verstellung der Drehachsen der Lamellen einen sehr geringen Abstand zwischen den außenliegenden Lamellen und dem Gehäuse einzuhalten, selbst wenn die Lamellen sich in ihren Extremstellungen befinden. Es wird angestrebt, daß die oberste und die unterste Lamelle in den Extremstellungen direkt am Gehäuse anliegen.

Gemäß einer bevorzugten Ausführungsform der Erfindung ist vorgesehen, daß ein zweites Koppelelement verwendet wird, das relativ zum Gehäuse verstellbar ist, daß jede Lamelle um die zweite Schwenkachse drehbar mit dem zweiten Koppelelement gekoppelt ist und daß das Einstellelement mit den beiden Koppelelementen so verbunden ist, daß durch Betätigung des Einstellelements die Stellung der Koppelelemente relativ zueinander und damit die Ausrichtung der Lamellen eingestellt werden kann. Bei dieser Ausführungsform ergibt sich die Verstellung der Lamellen durch die Überlagerung von zwei Translationsbewegungen der Koppelelemente. Zusätzlich zu den oben aufgeführten Vorteilen kann hier durch die Art und Weise der Verstellung der Koppelelemente die Anordnung der Lamellen in verschiedenen gekippten Stellungen so herbeigeführt werden, daß der Eindruck einer gleichmäßigen Verteilung der Lamellen entsteht.

Gemäß einer weiteren bevorzugten Ausführungsform der Erfindung ist vorgesehen, daß die zweite Schwenkachse in einer Schiebeführung im Gehäuse gelagert ist, wobei die Schiebeführung der zweiten Schwenkachse etwa senkrecht zur Schiebeführung des ersten Koppelelements ausgerichtet ist. Bei dieser Ausführungsform ergeben sich bei einem einfachen Aufbau im wesentlichen dieselben Vorteile wie bei der ersten Ausführungsform.

Vorteilhafte Ausgestaltungen der Erfindung ergeben sich aus den Unteransprüchen.

Die Erfindung wird nachfolgend unter Bezugnahme auf zwei bevorzugte Ausführungsformen beschrieben, die in den beigefügten Zeichnungen dargestellt sind. In diesen zeigen:
- Figur 1 in einer abgeschnittenen Ansicht eine Vorderansicht eines Luft-Ausströmers gemäß einer ersten Ausführungsform;
- Figur 2 den Luft-Ausströmer von Figur 1 in einer Seitenansicht;
- Figur 3 in einer schematischen Seitenansicht einen Luft-Ausströmer gemäß einer zweiten Ausführungsform;
- Figur 4 einen Schnitt entlang der Linie IV-IV von Figur 3; und
- Figur 5 in einer schematischen Seitenansicht einen Luft-Ausströmer gemäß einer dritten Ausführungsform.

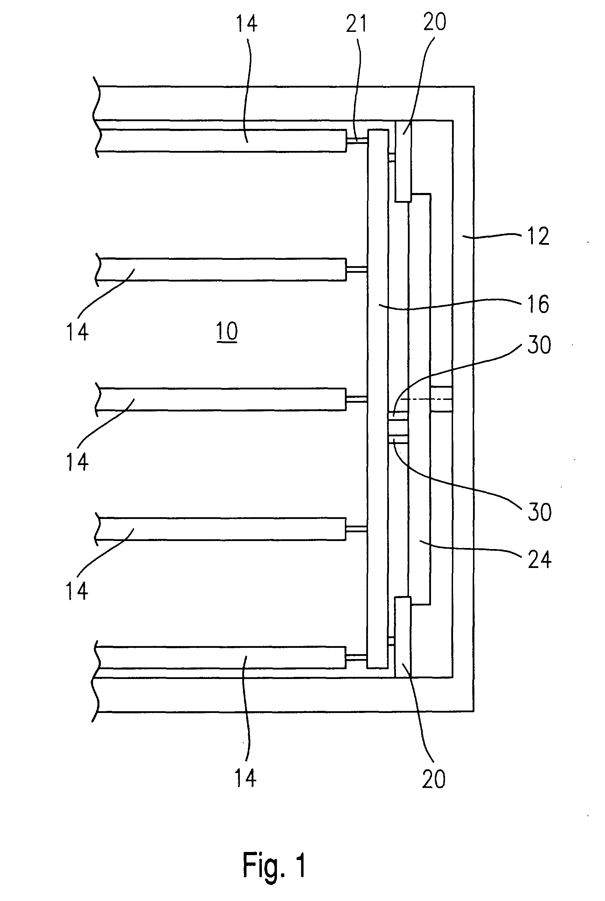

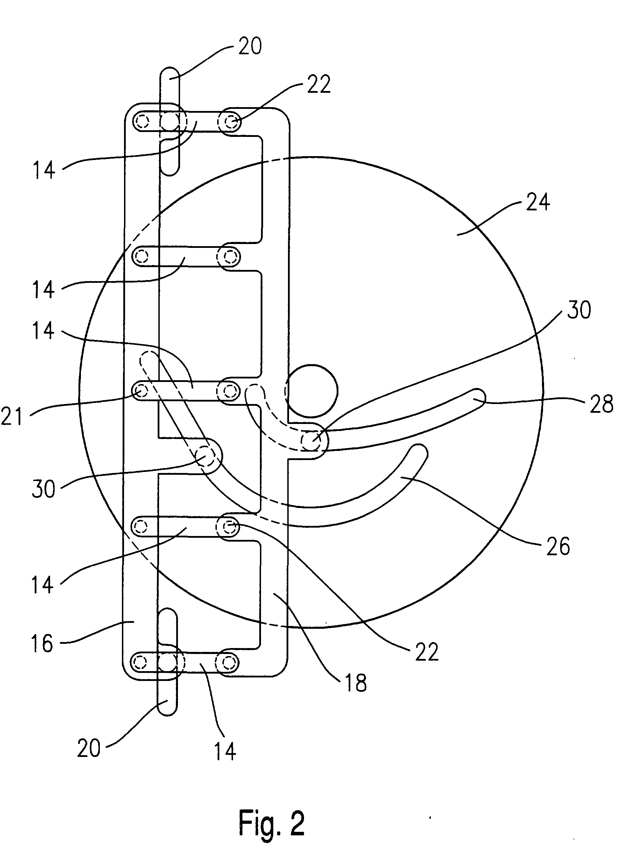

In Figur 1 ist ein Ausströmer 10 gemäß einer ersten Ausführungsform zu sehen, der ein Gehäuse 12 sowie mehrere darin angeordnete Lamellen 14 aufweist (siehe auch Figur 2).

Im Gehäuse sind ein erstes Koppelelement 16 sowie ein zweites Koppelelement 18 angeordnet, die beide als Koppelstangen ausgeführt sind. Das erste Koppelelement 16 ist im Gehäuse 12 in einer Schiebeführung 20 gelagert, die hier nur schematisch dargestellt ist. Eine Führung für das zweite Koppelelement 18 ist nicht erforderlich. Jede der Lamellen 14 ist an ihrem vorderen Ende drehbar am ersten Koppelelement 16 und mit ihrem hinteren Ende drehbar am zweiten Koppelelement 18 gelagert. Zu diesem Zweck sind Stifte 22 vorgesehen, die in entsprechende Öffnungen der Koppelelemente eingreifen.

Im Gehäuse 12 ist ein Einstellelement 24 drehbar gelagert, das hier als Einstellrad ausgeführt ist. Das Einstellelement 24 ist mit einer ersten Kulisse 26 und einer zweiten Kulisse 28 versehen. Die beiden Koppelelemente 16, 18 sind mit Zapfen 30 versehen, die in die Kulissen 26 bzw. 28 eingreifen, so daß die Position des ersten Koppelelements 16 von der ersten Kulisse 26 bestimmt ist, während die Position des zweiten Koppelelements 18 von der zweiten Kulisse 28 bestimmt ist.

Durch Drehung des Einstellelementes 26 kann die Ausrichtung der Lamellen 14 relativ zum Gehäuse eingestellt werden, so daß auch die Richtung eines aus dem Ausströmer 10 austretenden Luftstroms eingestellt werden kann. Wenn das Einstellelement 24 aus der in Figur 2 gezeigten Stellung, in der die Lamellen 14 waagrecht ausgerichtet sind, im Uhrzeigersinn gedreht wird, wird das zweite Koppelelement 18 von der Kulisse 28 bezüglich Figur 2 nach unten verstellt, während das erste Koppelelement 16 nicht verstellt wird. Dies ist darauf zurückzuführen, daß der Zapfen 30 des ersten Koppelelementes in einen Bereich der Kulisse 26 einläuft, der etwa konzentrisch zur Drehachse des Einstellelementes 24 ist. Als Folge der Verstellung der beiden Koppelelemente relativ zueinander wird der hintere Bereich der Lamellen 14 nach unten bewegt, während der vordere Bereich etwa ortsfest verbleibt. Ein aus dem Ausströmer austretender Luftstrom wird also nach oben abgelenkt.

Je nach Gestaltung der Kulissen könnte zusätzlich auch das vordere Koppelelement bei einer Drehung im Uhrzeigersinn verschoben werden, so daß sich die Verstellung der Lamellen aus einer Überlagerung von zwei Bewegungen ergibt.

Wenn dagegen das Einstellelement 24 entgegen dem Uhrzeigersinn aus der in Figur 2 gezeigten Stellung verdreht wird, wird das erste Koppelelement 16 nach unten verstellt. Das zweite Koppelelement 18 verlagert sich, da der Zapfen 30 des zweiten Koppelelementes in einen Bereich der Kulisse 28 eintritt, der sich annähernd konzentrisch zur Drehachse des Einstellelementes 24 erstreckt, nur geringfügig, und zwar bezüglich Figur 2 nach links hin zum ersten Koppelelement, während es etwa auf derselben Höhe verbleibt. Somit wird der vordere Rand der Lamellen 14 nach unten verlagert, und ein aus dem Ausströmer austretender Luftstrom wird nach unten abgelenkt.

Da die Lamellen 14 nicht mehr, wie bei einem herkömmlichen Ausströmer, um eine ortsfeste Achse verschwenkt werden, sondern durch die Überlagerung von zwei Translationsbewegungen der Koppelelemente verstellt werden, können die beiden äußeren Lamellen sehr viel näher am Gehäuse 12 angeordnet sein und in den Extremstellungen direkt an diesem anliegen, so daß auch der in diesem Bereich aus dem Ausströmer austretende Luftstrom umgelenkt wird.

Die Koppelelemente sind bei dieser Ausführungsform mittels des Einstellrades so verstellbar, daß die Lamellen in eine bezüglich Figur 2 um 90° verschwenkte, also senkrechte Stellung gebracht werden können, in der sie alle in einer Ebene liegen. Dabei verbleibt zwischen den Rändern der einzelnen Lamellen jeweils ein schmaler Spalt, durch den Luft ungerichtet aus dem Ausströmer austreten kann.

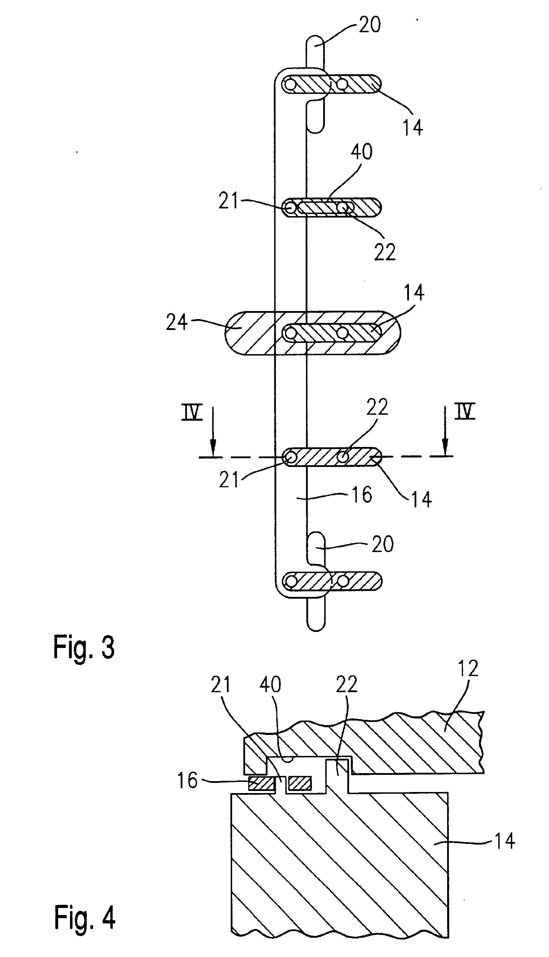

In den Figuren 3 und 4 ist ein Ausströmer 10 gemäß einer zweiten Ausführungsform zu sehen. Für die von der ersten Ausführungsform bekannten Bauteile werden dieselben Bezugszeichen verwendet, und es wird auf die obigen Erläuterungen verwiesen.

Auch bei der zweiten Ausführungsform ist ein erstes Koppelelement 16 vorgesehen, das verschiebbar am Gehäuse gelagert ist und an dem die Lamellen mittels der ersten Schwenkachse 21 angebracht sind. Im Gegensatz zur ersten Ausführungsform ist aber kein zweites Koppelelement vorgesehen; jede Lamelle ist mittels der zweiten Schwenkachse 22 direkt in einer zweiten Schiebeführung 40 (hier nur für eine der Lamellen dargestellt) im Gehäuse gelagert. Die zweite Schwenkachse 22 ist von der am vorderen Rand jeder Lamelle angeordneten ersten Schwenkachse aus gesehen etwas hinter der Mitte der Lamelle angeordnet.

Die Lamellen können mittels des Einstellelements 24 in die gewünschte Stellung verschwenkt werden, wobei das Einstellelement hier als Einstellnase ausgebildet ist, die direkt auf einer der Lamellen angebracht ist, so daß sie von außen zugänglich ist.

Auch bei dieser Ausführungsform ergibt sich die Verstellung der Lamellen durch die Überlagerung von zwei Translationsbewegungen; die erste Schwenkachse 21 wird in der von der ersten Schiebeführung 20 vorgegebenen Richtung verstellt, während die zweite Schwenkachse 22 in der von der zweiten Schiebeführung 40 vorgegebenen, dazu senkrechten Richtung verstellt wird.

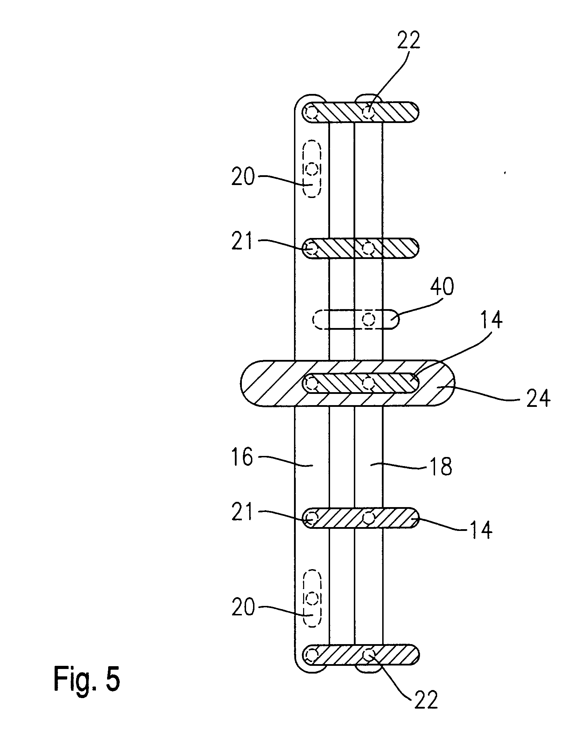

In Figur 5 ist ein ein Luft-Ausströmer gemäß einer dritten Ausführungsform zu sehen. Hier ist ähnlich wie bei der ersten Ausführungsform ein zweites Koppelelement 18 vorgesehen, an dem die Lamellen 14 mit ihrer zweiten Schwenkachse 22 drehbar gelagert ist. Zur Führung des Koppelelements ist eine Schiebeführung 40 vorgesehen, die senkrecht zur Schiebeführung 20 für das erste Koppelelement ausgerichtet ist. Da die Parallelität der beiden Koppelelemente durch die Verbindung zu den Lamellen gewährleistet ist, ist am zweiten Koppelelement eine einzige Schiebeführung ausreichend.

Alternativ wäre auch möglich, zur Führung des ersten Koppelelements ein Verstellrad mit einer Führung für das erste Koppelelement zu verwenden, wie grundsätzlich von der ersten Ausführungsform bekannt ist. Dann kann auf die Einstellnase zur Verstellung der Lamellen verzichtet werden.

## Patentansprüche

1. Luft-Ausströmer, insbesondere zur Fahrzeugklimatisierung, mit einem Gehäuse (12), mehreren Lamellen (14), die schwenkbar angebracht sind, und einem Einstellelement (24), mittels dem die Ausrichtung der Lamellen eingestellt werden kann,
**dadurch gekennzeichnet, daß** ein erstes Koppelelement (16) vorgesehen ist, mit dem jede Lamelle (14) um eine erste Schwenkachse (21) drehbar gekoppelt ist, daß das erste Koppelelement (16) in einer Schiebeführung (20) verschiebbar am Gehäuse (12) gelagert ist und daß an jeder Lamelle eine zweite Schwenkachse (22) vorgesehen ist.

2. Ausströmer nach Anspruch 1, **dadurch gekennzeichnet, daß** ein zweites Koppelelement vorgesehen ist, das relativ zum Gehäuse (12) verstellbar ist und daß jede Lamelle um die zweite Schwenkachse (22) drehbar mit dem zweiten Koppelelement gekoppelt ist.

3. Ausströmer nach Anspruch 1 oder Anspruch 2, **dadurch gekennzeichnet, daß** das Einstellelement (24) mit einem Koppelelement (16; 16, 18) so verbunden ist, daß durch Betätigung des Einstellelements (24) die Stellung der Koppelelemente (16, 18) relativ zueinander und damit die Ausrichtung der Lamellen (14) eingestellt werden kann.

4. Ausströmer nach Anspruch 3, **dadurch gekennzeichnet, daß** das Einstellelement ein Einstellrad (24) ist, das drehbar im Gehäuse (12) gelagert ist und mittels einer Kulissenführung (26, 30; 28, 30) mit dem entsprechenden Koppelelement zusammenwirkt.

5. Ausströmer nach Anspruch 4, **dadurch gekennzeichnet, daß** das Einstellrad mit mindestens einer Kulisse (26, 28) versehen ist und daß das Koppelelement mit einem Zapfen (30) versehen ist, der in die zugehörige Kulisse eingreift.

6. Ausströmer nach Anspruch 2, **dadurch gekennzeichnet, daß** eine zweite Schiebeführung im Gehäuse vorgesehen ist, in der das zweite Koppelelement gelagert ist.

7. Ausströmer nach Anspruch 6, **dadurch gekennzeichnet, daß** die zweite Schiebeführung etwa senkrecht zur ersten Schiebeführung ausgerichtet ist.

8. Ausströmer nach einem der Ansprüche 2 bis 7, **dadurch gekennzeichnet, daß** jede Lamelle (14) mit den Koppelelementen (16, 18) in ihrem vorderen und ihrem hinteren Bereich verbunden ist.

9. Ausströmer nach Anspruch 1, **dadurch gekennzeichnet, daß** die zweite Schwenkachse (22) in einer Schiebeführung (40) im Gehäuse gelagert ist.

10. Ausströmer nach Anspruch 9, **dadurch gekennzeichnet, daß** die Schiebeführung (40) der zweiten Schwenkachse (22) etwa senkrecht zur Schiebeführung (20) des ersten Koppelelements (16) ausgerichtet ist.

11. Ausströmer nach einem der Ansprüche 6 bis 10, **dadurch gekennzeichnet, daß** das Einstellelement (24) eine auf eine der Lamellen aufgesetzte Einstellnase ist.
